# EUROPÄISCHE PATENTANMELDUNG

(11) **EP 4 732 661 A1**
(43) Veröffentlichungstag der Anmeldung: **29.04.2026**
(21) Anmeldenummer: 24208353.3
(22) Anmeldetag: 23.10.2024
(51) Int. Cl.: A01F 15/10

(54) **MESSER, SCHNEIDVORRICHTUNG, ERNTEMASCHINE, VERFAHREN UND HEBEL-MESSER-SYSTEM**

(71) Anmelder: Deere & Company, Moline, IL 61265 (US)
(72) Erfinder: FILLOUX, ALEXIS, 68163 Mannheim (DE); BENOIT-GUERINDON, FLORIAN, 68163 Mannheim (DE)
(74) Vertreter: Stein, Stefan

(57) **Zusammenfassung**

Die Erfindung betrifft ein Messer für eine Schneidvorrichtung (38) für eine landwirtschaftliche Erntemaschine, umfassend, einen Messerkörper (102) mit einer ersten Seite (104) und einer zweiten Seite (106). Der Messerkörper (102) weist einen Schneidebereich (108) mit einer Schneide (110) auf, die sich entlang einer Längsachse (112) des Messerkörpers (102) erstreckt. Das Messer (40) umfasst einen Schwenkbereich (114) mit einer ersten Ausnehmung (116) und einen Positionierungsbereich (118) mit einer zweiten Ausnehmung (120) zur Anordnung des Messers (40) an der Schneidvorrichtung (38) der landwirtschaftlichen Erntemaschine. Die erste Ausnehmung (116) ist zur Aufnahme einer Schwenkwelle (202) der Schneidvorrichtung (38) ausgebildet, und die zweite Ausnehmung (120) ist zur Aufnahme einer Positionierungseinrichtung (204) ausgebildet. Das Messer (40) weist mindestens ein erstes und zweites Loch (122, 124) auf. Die Erfindung betrifft weiter eine Schneidvorrichtung (38), eine Erntemaschine, ein Verfahren und ein Hebel-Messer-System.

## Beschreibung

Die Erfindung betrifft ein Messer gemäss dem Oberbegriff des unabhängigen Anspruchs 1, eine Schneidvorrichtung gemäss dem Oberbegriff des unabhängigen Anspruchs 5, eine landwirtschaftliche Erntemaschine gemäss dem Oberbegriff des unabhängigen Anspruchs 13, ein Verfahren gemäss dem Oberbegriff des unabhängigen Anspruchs 14 und ein Hebel-Messer-System gemäss dem Oberbegriff des unabhängigen Anspruchs 15.

### Stand der Technik

Bei landwirtschaftlichen Erntemaschinen, wie Ballenpressen und Ladewagen, besteht in vielen Fällen ein Bedürfnis, das landwirtschaftliche Erntegut vor der Einlagerung in kürzere Stücke zur zerschneiden. Dazu werden Schneidvorrichtungen mit einer Anzahl von seitlich nebeneinander angeordneten Messern verwendet, die sich in einen Kanal hineinerstrecken, in dem das Erntegut gefördert wird. Zur Veränderung der Schnittlänge wird jeweils eine Anzahl von Messern in den Kanal hinein oder daraus heraus bewegt.

### Aufgabe

Ausgehend von diesem Stand der Technik ist es eine Aufgabe der vorliegenden Erfindung eine gegenüber dem Stand der Technik ein verbessertes Messer, eine verbesserte Schneidvorrichtung, eine verbesserte Erntemaschine, ein verbessertes Verfahren und ein verbessertes Hebel-Messer-System vorzuschlagen. Im Speziellen ist es eine Aufgabe der vorliegenden Erfindung ein verbessertes Messer, eine verbesserte Schneidvorrichtung, eine verbesserte Erntemaschine, ein verbessertes Verfahren und ein verbessertes Hebel-Messer-System vorzuschlagen, die konstruktiv einfacher ausgestaltet und/oder das Messer einfacher zu handhaben ist.

### Zusammenfassung der Erfindung

Diese Aufgabe wird durch ein Messer mit den Merkmalen des unabhängigen Anspruchs 1, eine Schneidvorrichtung mit den Merkmalen des unabhängigen Anspruchs 5, eine landwirtschaftliche Erntemaschine mit den Merkmalen des unabhängigen Anspruchs 13, ein Verfahren mit den Merkmalen des unabhängigen Anspruchs 14 und ein Hebel-Messer-System mit den Merkmalen des unabhängigen Anspruchs 15. Die abhängigen Ansprüche beziehen sich auf besonders vorteilhafte Ausführungsformen der Erfindung.

Erfindungsgemäss wird ein Messer für eine Schneidvorrichtung für eine landwirtschaftliche Erntemaschine, insbesondere einen Ladewagen oder eine Ballenpresse, vorgeschlagen. Das Messer umfasst einen Messerkörper mit einer ersten Seite und einer zweiten Seite. Die erste und zweite Seite können jeweils eine Ebene definieren und/oder die erste und zweite Seite können jeweils als eine Ebene ausgebildet sein. Die erste und zweite Ebene können parallele Ebenen sein. Der Messerkörper weist einen Schneidebereich mit einer Schneide auf, wobei sich die Schneide entlang einer Längsachse des Messerkörpers erstreckt. Ausserdem umfasst das Messer, insbesondere der Messerkörper, einen Schwenkbereich mit einer ersten Ausnehmung oder einer ersten Aussparung zur Anordnung und/oder Aufnahme des Messers an und/oder in der Schneidvorrichtung der landwirtschaftlichen Erntemaschine.

Im Weiteren umfasst das Messer, insbesondere der Messerkörper, einen Positionierungsbereich mit einer zweiten Ausnehmung oder einer zweiten Aussparung zur Anordnung und/oder Aufnahme des Messers an und/oder in der Schneidvorrichtung der landwirtschaftlichen Erntemaschine. Die erste Ausnehmung ist zur Aufnahme einer Schwenkwelle der Schneidvorrichtung ausgebildet. Die zweite Ausnehmung ist zur Aufnahme einer Positionierungseinrichtung der Schneidvorrichtung, insbesondere eines Hebels der Positionierungseinrichtung der Schneidvorrichtung ausgebildet. Ausserdem umfasst das Messer, insbesondere der Messerkörper, mindestens ein erstes und zweites Loch, insbesondere genau ein erstes und ein zweites Loch.

Das Messer umfasst den Messerkörper. Der Messerkörper kann ein hartes Material, beispielsweise Stahl sein, um der wiederholten Belastung beim Schneiden von Erntegut standzuhalten. Ausserdem kann der Messerkörper eine Stützstruktur für den Schneidebereich, insbesondere die Schneide umfassen.

Der Messerkörper umfasst die erste Seite und die zweite Seite, wobei die zweite Seite auf der anderen Seite des Messerkörpers angeordnet ist als die erste Seite. Die erste Seite und die zweite Seite können eben oder flach sein, sodass die erste Seite parallel zur zweiten Seite verlaufen kann. Der Abstand der ersten und zweiten Seite, insbesondere die Dicke des Messerkörpers, kann zwischen 1 bis 20 mm betragen, bevorzugt 2 bis 10 mm, besonders bevorzugt 3 bis 8 mm. Im Speziellen kann der Messerkörper 5 Millimeter dick sein.

Der Schwenkbereich, insbesondere die erste Ausnehmung, und der Positionierungsbereich, insbesondere die zweite Ausnehmung, des Messers bzw. Messerkörpers können eine schneidenlose Aussenkontur aufweisen, also insbesondere eine Aussenkontur ohne Schneide. Der Schwenkbereich, insbesondere die erste Ausnehmung, und der Positionierungsbereich, insbesondere die zweite Ausnehmung, können zur Aussenkontur des Messers bzw. Messerkörpers hin offen oder geöffnet sein. Das erste und zweite Loch können keine Verbindung zur Aussenkontur des Messers bzw. Messerkörpers aufweisen, also insbesondere vollständig im Messerkörper angeordnet und/oder aufgenommen sein. Der Schwenkbereich, insbesondere die erste Ausnehmung oder die erste Aussparung, kann an einer ersten Kante des Messers oder des Messerkörpers angeordnet sein, die insbesondere eine schneidlose Kante sein kann. Die erste Ausnehmung oder die erste Aussparung kann zur Aussenkontur der ersten Kante hin geöffnet sein. Das erste Loch kann an oder im Bereich einer zweiten Kante des Messers oder des Messerkörpers angeordnet sein, die insbesondere eine schneidlose Kante sein kann. Das erste Loch kann zur Aussenkontur der zweiten Kante hin nicht geöffnet sein. Das erste Loch kann ausserhalb des Schwenk- und Positionierungsbereichs angeordnet sein. Das erste Loch kann diametral und/oder gegenüberliegend zum Schwenkbereich angeordnet sein. Die zweite Kante kann gegenüberliegend und/oder parallel und/oder diametral zur ersten Kante angeordnet sein. Der Schneidebereich, insbesondere die Schneide, kann an einer dritten Kante des Messers oder des Messerkörpers angeordnet sein oder die dritte Kante kann zumindest teilweise als Schneide ausgebildet sein. Der Positionierungsbereich, insbesondere die zweite Ausnehmung oder die zweite Aussparung, kann an einer vierten Kante des Messers oder des Messerkörpers angeordnet sein, die insbesondere eine schneidlose Kante sein kann. Die zweite Ausnehmung oder die zweite Aussparung kann zur Aussenkontur der vierten Kante hin geöffnet sein. Das zweite Loch kann am oder im Positionierungsbereich und/oder der vierten Kante angeordnet sein. Das zweite Loch kann zur Aussenkontur der zweiten Kante hin nicht geöffnet sein. Die dritte Kante kann gegenüberliegend und/oder parallel und/oder diametral zur vierten Kante angeordnet sein.

Wesentlich für die Erfindung ist, dass das Messer mindestens zwei Löcher aufweist, wobei das erste Loch diametral und/oder gegenüberliegend zum Schwenkbereich angeordnet sein kann. Dadurch kann vorteilhafterweise, wenn eine Kraft am ersten Loch, insbesondere in Richtung des Schneidbereichs oder der Schneide am Messer angreift, das Messer um den Schwenkbereich schwenkbar sein.

In Ausgestaltung der Erfindung, ist das erste Loch zur Aufnahme eines Hebelelements ausgebildet. Ausserdem kann das erste Loch kleiner als das zweite Loch sein. Dadurch kann vorteilhafterweise, wenn mit dem Hebelelement eine Kraft am ersten Loch in Richtung des Schneidbereichs oder der Schneide am Messer angreift, das Messer um den Schwenkbereich schwenkbar sein.

In Ausgestaltung der Erfindung, sind die erste und zweite Ausnehmung zur Aussenkontur des Messers oder des Messerkörpers hin offen und/oder das erste und zweite Loch zur Aussenkontur des Messers hin geschlossen.

In Ausgestaltung der Erfindung, weist die Schneide oder der Schneidebereich eine Vielzahl von Zähnen auf, insbesondere eine Vielzahl von Zähnen, von denen jeder eine Vorderkante und eine Hinterkante umfasst oder enthält, wobei sich die Vorderkante von der Hinterkante eines angrenzenden Zahns erstreckt, und eine Vielzahl von Tälern umfasst oder enthält. Jeder der Vielzahl von Zähnen kann von einer Keilwelle ausgehen, die durch den Messerkörper definiert ist. Die Keilwelle kann sich entlang der Längsachse des Messerkörpers erstrecken. Jeder der Zähne kann eine Breite "w" aufweisen, die im Allgemeinen durch einen vertieften Abschnitt oder ein Tal des Messerkörpers definiert sein kann. Die vertieften Abschnitte jedes Zahns können sich von der Keilverzahnung bis zur Schneide erstrecken. Jeder der vertieften Abschnitte kann eine Oberfläche aufweisen, die geneigt sein kann. Durch die Neigung dieser Oberfläche kann auch die Schneide jedes Zahns geneigt sein, um den Schneidvorgang zu verbessern.

Die Erfindung betrifft weiter eine Schneidvorrichtung für eine landwirtschaftliche Erntemaschine, umfassend mindestens ein Messer, insbesondere zwei oder mehr Messer, bevorzugt nach einem der Ansprüche 1 bis 4. Das Messer ist in einem, insbesondere im normalen Betrieb in einer Flussrichtung, von Erntegut durchströmbaren Kanal angeordnet. Das Messer ist um eine sich quer zum Kanal erstreckende Schwenkachse schwenkbar mit der Schneidvorrichtung, insbesondere einem Rahmen der Schneidvorrichtung, verbindbar oder verbunden, bevorzugt schwenkbar verbindbar oder verbunden und lösbar verbindbar oder verbunden. Im Speziellen kann das oder die Messer um die sich quer zum Kanal erstreckende Schwenkachse schwenkbar an der Schneidvorrichtung, insbesondere an den Rahmen der Schneidvorrichtung, angelenkt sein. Der Rahmen der Schneidvorrichtung kann dabei auch der Rahmen der Erntemaschine, insbesondere der Ballenpresse, Ballenpressenrahmen sein.

Die Schneidvorrichtung umfasst weiter eine Positionierungseinrichtung zur Einstellung und/oder Verstellung des Messers oder der Messer. Die Positionierungseinrichtung ist zwischen einer ersten Position, in der die Positionierungseinrichtung das oder die Messer in einer aktiven Position einstellt und/oder verstellt, insbesondere positioniert und/oder hält, in der sich das Messer in den Kanal erstreckt oder die Messer in den Kanal erstrecken, und einer zweiten Position, in der die Positionierungseinrichtung das oder die Messer nicht in der aktiven Position einstellt und/oder verstellt, insbesondere positioniert und/oder hält, in der das Messer aus dem Kanal ausgeschwenkt ist oder die Messer aus dem Kanal ausgeschwenkt sind, insbesondere aus dem Kanal zurückgezogen sind, und einer dritten Position einstellbar und/oder verstellbar, insbesondere beweglich, in der die Positionierungseinrichtung vom Messer oder von den Messern gelöst ist und/oder mit dem Messer oder den Messern nicht in Eingriff steht, um eine Bewegung des Messers oder der Messer unabhängig von der Positionierungseinrichtung zu ermöglichen.

Wesentlich für die Erfindung ist, dass das oder die Messer von der Schneidvorrichtung trennbar oder lösbar ist, wenn die Positionierungseinrichtung in der dritten Position ist. Im Speziellen kann das oder können die Messer vorteilhafterweise von der Schwenkwelle trennbar oder lösbar sein, wenn die Positionierungseinrichtung in der dritten Position ist, und vom oder im ersten Loch eine Kraft, insbesondere in Richtung des Schneidbereichs oder der Schneide, auf das Messer, insbesondere den Messerkörper einwirkt. Ausserdem kann die Stellung des Messers oder der Messer mit der Positionierungseinrichtung einstellbar und/oder verstellbar sein.

Die Positionierungseinrichtung kann derart ausgestaltet und/oder angeordnet und/oder konfiguriert sein, dass sie mit dem Messer oder den Messern in Eingriff steht und eine Bewegung des Messers oder der Messer unabhängig von der Positionierungseinrichtung verhindert, wenn sich die Positionierungseinrichtung in der ersten und/oder der zweiten Position und in Zwischenpositionen zwischen der ersten und zweiten Position befindet. Zwei oder mehr Messer oder eine Anzahl von Messern können, insbesondere in Flussrichtung, quer zum von Erntegut durchströmbaren Kanal nebeneinander angeordnet sein. Die Längsachse des Messerkörpers, insbesondere der Schneidebereich und/oder die Schneide, kann, insbesondere in Flussrichtung, quer oder orthogonal zum von Erntegut durchströmbaren Kanal angeordnet sein oder sich erstrecken. Die Längsachse des Messerkörpers, insbesondere der Schneidebereich und/oder die Schneide, kann quer oder orthogonal zur Schwenkachse angeordnet sein oder sich erstrecken. Die erste und zweite Seite, insbesondere die erste und zweite Ebene, können quer oder orthogonal zur Schwenkachse angeordnet sein oder sich erstrecken. Der Schwenkbereich, insbesondere die erste Ausnehmung, kann, insbesondere in Flussrichtung, im von Erntegut durchströmbaren Kanal stromaufwärts angeordnet sein. Das erste Loch kann, insbesondere in Flussrichtung, im von Erntegut durchströmbaren Kanal stromabwärts angeordnet sein. Die Flussrichtung kann orthogonal und/oder quer zur Schwenkachse ausgerichtet und/oder angeordnet sein. Der Positionierungsbereich, insbesondere die zweite Ausnehmung, kann, insbesondere in Flussrichtung, auf einer dem vom Erntegut durchströmbaren Kanal abgewandten Seite angeordnet sein. Das zweite Loch kann, insbesondere in Flussrichtung, auf einer dem vom Erntegut durchströmbaren Kanal abgewandten Seite angeordnet sein. Die Schneidvorrichtung kann einen Rotor, insbesondere einen Rotor mit einer Vielzahl von Zinken umfassen. Der Rotor kann drehbar sein, um ein landwirtschaftliches Erntegut entlang des Kanals zu transportieren. Alternativ oder zusätzlich kann die Positionierungseinrichtung zur Steuerung der Bewegung des Messers oder der Messer, zwischen der ersten und zweiten und dritten Position und/oder in die erste und zweite und dritte Position bewegbar sein. Mit anderen Worten, das Messer oder die Messer können mit der Positionierungseinrichtung bewegbar sein, insbesondere kann die Positionierungseinrichtung zwischen der ersten und zweiten und dritten Position und/oder in die erste und zweite und dritte Position bewegbar sein. In der ersten Position, in der sich das Messer in den Kanal erstreckt oder die Messer in den Kanal erstrecken, kann die Positionierungseinrichtung mit dem Rotor zusammenwirken, um das Erntegut zu schneiden.

Die Positionierungseinrichtung kann, insbesondere unterhalb des Rotors, eine starre Wand, bevorzugt ein Unterboden, besonders bevorzugt ein Blech umfassen. Das Erntegut kann an der Oberseite der Wand entlang befördert werden. Zwischen der Wand und dem Rotor befindet sich demnach der Kanal, durch den das Erntegut gefördert wird.

Das oder die Messer können sich in der aktiven Position durch Schlitze in der Wand in den Kanal erstrecken und/oder hineinerstrecken. Das oder die Messer können in der nicht aktiven Position aus den Schlitzen in der Wand aus dem Kanal herausgezogen sein, insbesondere aus dem Kanal zurückgezogen sein.

Die Schneidvorrichtung bietet den Vorteil, dass das Entfernen des Messers, wenn die Positionierungseinrichtung in der dritten Position ist, einfacher ist. Das oder die Messer können auf einfach Art und Weise durch eine Kraft, die insbesondere am oder im ersten Loch angreifen kann, in Richtung des Schneidebereichs oder der Schneide auf das Messer, insbesondere den Messerkörper, entfernt werden.

In Ausgestaltung der Erfindung, umfasst die Schneidvorrichtung eine Schwenkwelle. Die Schwenkachse kann durch die Schwenkwelle ausgebildet oder definiert sein. Ausserdem kann das oder die Messer von der Schwenkwelle trennbar oder lösbar sein, wenn die Positionierungseinrichtung in der dritten Position ist. Im Speziellen kann das oder die Messer von der Schwenkwelle trennbar oder lösbar sein, wenn die Positionierungseinrichtung in der dritten Position ist und eine Kraft in Richtung des Schneidbereichs oder der Schneide auf das Messer, insbesondere den Messerkörper, einwirkt. Das oder die Messer können, insbesondere an der stromaufwärts im Kanal gelegenen Seite des Messers oder der Messer, um die oder an der von der ersten Ausnehmung des Messers, insbesondere der jeweiligen Messer, aufgenommenen Schwenkwelle schwenkbar an der Schneidvorrichtung, insbesondere an einem Rahmen der Schneidvorrichtung, angelenkt sein. Die Schwenkwelle kann von der ersten Ausnehmung des Messers oder der ersten Ausnehmung des jeweiligen Messers aufgenommen sein. Die Schwenkwelle kann in der ersten Ausnehmung oder in der ersten Ausnehmung des jeweiligen Messers angeordnet sein.

In Ausgestaltung der Erfindung weisen die Schwenkwelle und/oder das Messer eine Verriegelungsformation auf, die das Messer in einer ersten Konfiguration an der Schwenkwelle verriegeln und in einer zweiten Konfiguration eine Trennung des Messers von der Schwenkwelle ermöglichen. Die Schwenkwelle und das Messer können auch eine komplementäre Verriegelungsformation aufweisen, die das Messer in der ersten Konfiguration an der Schwenkwelle verriegeln und in einer zweiten Konfiguration eine Trennung des Messers von der Schwenkwelle ermöglichen. Die Schwenkwelle und/oder das Messer können durch Drehung, insbesondere relative Drehung, des Messers und/oder der Schwenkwelle zwischen der ersten Konfiguration und der zweiten Konfiguration verstellbar sein. Die Schwenkwelle kann beispielsweise abgeflachte Bereiche aufweisen, die mit der ersten Ausnehmung, insbesondere mit einer komplementär geformten ersten Ausnehmung, im Messer zusammenwirken. Die Schwenkwelle, insbesondere die abgeflachten Bereiche der Schwenkwelle, können beispielsweise nur dann durch die erste Ausnehmung hindurchpassen, wenn sie sich in einer bestimmten Stellung befindet.

In Ausgestaltung der Erfindung ist die Positionierungseinrichtung in der ersten Position und/oder der zweiten Position und allen Zwischenpositionen zwischen der ersten und der zweiten Position mit dem Positionierungsbereich des Messers, bevorzugt dem Messerkörper, besonders bevorzugt mit der zweiten Ausnehmung, verbunden, und/oder steht insbesondere mit dem Positionierungsbereich in Eingriff und/oder ist insbesondere zumindest teilweise in der oder von der zweiten Ausnehmung aufgenommen. Im Speziellen kann die Positionierungseinrichtung in der ersten Position und/oder der zweiten Position und allen Zwischenpositionen zwischen der ersten und der zweiten Position mit dem Positionierungsbereich des Messers, insbesondere des Messerkörpers, mit der zweiten Ausnehmung des Messers, insbesondere der zweiten Ausnehmung des jeweiligen Messers, verbunden sein, bevorzugt in Eingriff stehen und/oder zumindest teilweise von der zweiten Ausnehmung aufgenommen sein. Die Positionierungseinrichtung kann konfiguriert sein, dass die Positionierungseinrichtung mit dem Messer, bevorzugt dem Messerkörper, besonders bevorzugt mit der zweiten Ausnehmung, verbunden ist, insbesondere in Eingriff tritt.

Die Positionierungseinrichtung und/oder das Messer, bevorzugt die zweite Ausnehmung, können eine Eingriffsformation, insbesondere eine komplementäre Eingriffsformation aufweisen. Falls die Schneidvorrichtung mehrere Messer umfasst, kann die zweite Ausnehmung des jeweiligen Messers eine Eingriffsformation, insbesondere eine komplementäre Eingriffsformation aufweisen. Die Eingriffsformation, insbesondere die komplementäre Eingriffsformation, kann konfiguriert sein, den Eingriff zwischen der Positionierungseinrichtung und dem Messer, bevorzugt dem Messerkörper, besonders bevorzugt der zweiten Ausnehmung, in der ersten und zweiten Position und allen Zwischenpositionen zwischen der ersten und der zweiten Position aufrechterhalten und ein Lösen der Positionierungseinrichtung vom Messer, bevorzugt dem Messerkörper, besonders bevorzugt der zweiten Ausnehmung, in der dritten Position ermöglicht. Vorzugsweise kann die Eingriffsformation konfiguriert sein, dass diese die Relativbewegung zwischen der Positionierungseinrichtung und dem Messer, bevorzugt dem Messerkörper, besonders bevorzugt der zweiten Ausnehmung, in einer tangentialen Richtung relativ zur Schwenkachse begrenzen und/oder eine Relativbewegung des Messers in einer radialen Richtung relativ zur Schwenkachse zulassen.

Die zweite Ausnehmung kann einen Schlitz umfassen, an oder in welchen ein Hebel oder ein Eingriffselement der Positionierungseinrichtung eingreift. Der Schlitz kann im Wesentlichen parallel zur vierten Kante des Messers, insbesondere des Messerkörpers verlaufen. Die zweite Ausnehmung, insbesondere die Eingriffsformation kann den Schlitz aufweisen. Der Schlitz kann mit der zweiten Ausnehmung verbunden sein oder als Teil der zweiten Ausnehmung ausgebildet sein. Der Schlitz kann im Wesentlichen parallel zur Längsachse des Messers sein. Die Positionierungseinrichtung kann ein Eingriffselement umfassen, das in den Schlitz eingreift. Das Eingriffselement kann beispielsweise ein Stift sein.

In Ausgestaltung der Erfindung umfasst die Positionierungseinrichtung eine Schaltwelle und einen Hebel. Die Anzahl der Hebel entspricht der Anzahl der Messer, wenn die Schneidvorrichtung zwei oder mehrere Messer umfasst. Umfasst die Schneidvorrichtung zwei oder mehrere Messer, kann jedem der Messer ein Hebel zugeordnet sein. Der Hebel kann in der ersten Position und/oder der zweiten Position und allen Zwischenpositionen zwischen der ersten und der zweiten Position mit dem Positionierungsbereich des Messers, bevorzugt dem Messerkörper, besonders bevorzugt mit der zweiten Ausnehmung, verbunden sein, und/oder insbesondere mit dem Positionierungsbereich in Eingriff stehen und/oder insbesondere zumindest teilweise in der zweiten Ausnehmung aufgenommen sein. Im Speziellen kann die Positionierungseinrichtung, insbesondere der jeweils dem Messer zugeordneten Hebel, in der ersten Position und der zweiten Position und allen Zwischenpositionen zwischen der ersten und der zweiten Position mit dem Positionierungsbereich des Messers, insbesondere des Messerkörpers, mit der zweiten Ausnehmung des Messers, insbesondere der zweiten Ausnehmung des jeweiligen Messers, verbunden sein, bevorzugt in Eingriff stehen und/oder zumindest teilweise von der zweiten Ausnehmung, insbesondere des jeweiligen Messers, aufgenommen sein. Der Hebel kann zwischen der ersten Position, in der er das ihm zugeordnete Messer in einer aktiven Position hält, in welcher es sich in den Kanal hinein erstreckt, um das Erntegut zu schneiden, und einer zweiten Position bewegbar sein. In letzterer hält er das Messer nicht in der aktiven Position, so dass es durch Wirkung der Schwerkraft und/oder durch das anströmende Erntegut in eine inaktive Position gelangt, in der es sich nicht in den Kanal hinein erstreckt.

Die Eingriffsformation, insbesondere die komplementäre Eingriffsformation, kann konfiguriert sein, den Eingriff zwischen dem Hebel und dem Messer, bevorzugt dem Messerkörper, besonders bevorzugt der zweiten Ausnehmung, in der ersten und zweiten Position und allen Zwischenpositionen zwischen der ersten und/oder der zweiten Position aufrechtzuerhalten und ein Lösen der Positionierungseinrichtung vom Messer, bevorzugt dem Messerkörper, besonders bevorzugt der zweiten Ausnehmung, in der dritten Position ermöglicht. Die Eingriffsformation kann umfassen, dass der Hebel beispielsweise einen Bereich, insbesondere einen abgeflachten Bereich, oder eine Verriegelung aufweist, die mit der zweiten Ausnehmung, insbesondere mit einer komplementär geformten zweiten Ausnehmung, im Messer zusammenwirken. Der Hebel kann beispielsweise nur dann durch die zweite Ausnehmung hindurchpassen, wenn sie sich in einer bestimmten Stellung befindet. Vorteilhafterweise kann dadurch die Positionierungseinrichtung konstruktiv auf einfache Art und Weise ausgebildet sein.

In Ausgestaltung der Erfindung ist die Schaltwelle um eine parallel zur Schwenkachse verlaufende Achse drehbar an der Schneidvorrichtung, insbesondere am Rahmen Schneidvorrichtung, angeordnet, bevorzugt abgestützt und/oder mit der Schneidvorrichtung, insbesondere dem Rahmen Schneidvorrichtung, verbunden. Der oder die Hebel können mit der Schaltwelle verbunden sein, insbesondere drehfest verbunden sein.

In Ausgestaltung der Erfindung ist das Messer mit der oder durch die mit dem Hebeln zusammenwirkende Schaltwelle in die erste und/oder zweite Position und/oder alle Zwischenpositionen zwischen der ersten und der zweiten Position bewegbar. Im Speziellen kann das Messer durch Drehung der Schaltwelle in die erste und/oder zweite Position und/oder alle Zwischenpositionen zwischen der ersten und der zweiten Position bewegbar sein.

In Ausgestaltung der Erfindung umfasst die Schneidvorrichtung einen Aktuator. Der Aktuator kann zwischen einer ersten Stellung, in der die Positionierungseinrichtung, insbesondere der Hebel, in der ersten Position ist, und einer zweiten Stellung, in der die Positionierungseinrichtung, insbesondere der Hebel, in der zweiten Position ist, und einer dritten Stellung beweglich sein, in der die Positionierungseinrichtung, insbesondere der Hebel, in der dritten Position ist. Im Speziellen kann der Aktuator mit der Schaltwelle verbunden sein, insbesondere können der Aktuator und die Schaltwelle mit einem oder durch ein Koppelelement miteinander verbunden sein. Die Schneidvorrichtung umfasst also einen Aktuator, insbesondere einen fremdkraftbetätigten Aktuator. Der Aktuator kann beispielsweise in Form eines Hydraulikzylinders oder Pneumatikzylinders oder Gewindetrieb oder Zahnstangentrieb oder Elektrozylinder ausgebildet sein. Der Aktuator kann hydraulisch, elektromechanisch, elektromagnetisch oder beispielsweise auch pneumatisch betätigbar ausgeführt sein. Auf diese Weise kann die Schneidvorrichtung relativ einfach und kostengünstig ausgeführt werden, und sie ist weniger verschleißanfällig als im Stand der Technik.

Die Erfindung betrifft weiter eine landwirtschaftliche Erntemaschine mit einer Schneidvorrichtung nach einem der Ansprüche 5 bis 12. Die erfindungsgemäße Schneidvorrichtung kann an beliebigen Erntemaschinen beispielsweise für die Halmguternte verwendet werden. Beispiele sind Ladewagen und Ballenpressen für runde oder rechteckige Ballen.

Die Ballenpresse kann eine Quaderballenpresse zum Bilden von Quaderballen aus Erntegut sein oder eine Rundballenpresse zum Bilden von Rundballen aus Erntegut sein. Die Ballenpresse kann einen Ballenpressenrahmen umfassen. Die Ballenpresse kann durch Räder auf dem Erdboden abgestützt sein. Die Presseinheit der Ballenpresse kann eine Presskammer, insbesondere eine größenveränderliche Presskammer oder eine variable Presskammer umfassen. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Das oder die Pressmittel kann in der grössenveränderlichen Ballenpresse beispielsweise indirekt über Rollen und/oder Ketten und/oder Wellen und/oder Zahnrädern, insbesondere mit der Antriebseinheit, antreibbar sein. Ebenso kann die Ballenpresse auch eine größenunveränderliche Presskammer umfassen. Hierbei kann ein Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Das Pressmittel kann in der grössenunveränderlichen Ballenpresse beispielsweise über Ketten und/oder Wellen und/oder Zahnrädern, insbesondere mit einer Antriebseinheit, antreibbar sein. Die Ballenpresse kann eine Aufnahmeeinheit, insbesondere eine Pick-up, zum Aufnehmen von Erntegut umfassen. Die Aufnahmeeinheit kann das Erntegut aufnehmen. Die Ballenpresse kann ausserdem eine Fördereinheit, beispielsweise einen Rotor und/oder ein Förderband, umfassen.

Mit der Presseinheit kann der Ballen, insbesondere in einer Pressphase, geformt werden. Die Ballenpresse kann eine Wickeleinheit zum Umwickeln des fertig geformten Ballens mit einem Wickelmaterial, beispielsweise Netz, Folie oder Bindegarn, umfassen. Der fertig geformte Ballen kann, insbesondere in der Presseinheit oder Presskammer, mit dem Wickelmaterial umwickelt werden. Die Ballenpresse kann eine Auswurfeinheit, beispielsweise eine Auswurfklappe oder ein Heckteil oder eine Heckklappe der Ballenpresse, umfassen. Der Ballen, bevorzugt der fertig geformte Ballen oder der fertig umwickelte Ballen, kann über die Auswurfeinheit, insbesondere über die mit der Auswurfeinheit versehene Presseinheit oder Presskammer, entladen oder ausgeworfen werden. Die Auswurfeinheit kann einen Teil der Presskammer, insbesondere einen Teil der Pressmittel, umfassen und/oder als ein Teil der Presskammer ausgebildet sein. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld liegt oder steht, und/oder zum Befördern des Ernteguts in die Presskammer kann ebenfalls am Ballenpressenrahmen angeordnet, bevorzugt mit diesem mechanisch verbunden und/oder an diesem befestigt sein.

Die Erfindung betrifft weiter ein Verfahren zum Trennen eines Messers von einer Schneidvorrichtung gemäss einem der Ansprüche 5 bis 12, insbesondere einer Schneidvorrichtung einer landwirtschaftlichen Erntemaschine. Das Verfahren kann eine Schneidvorrichtung nach einem der Ansprüche 5 bis 12 umfassen. Das Verfahren kann die folgenden Schritte umfassen: Bewegen der Positionierungseinrichtung in eine dritte Position, in der sie insbesondere vom Messer gelöst ist, um insbesondere eine Bewegung des Messers unabhängig von der Positionierungseinrichtung zu ermöglichen, und Trennen des Messers von der Schneidvorrichtung.

Die Erfindung betrifft weiter ein Messer-Wechsel-System mit einem Messer nach einem der Ansprüche 1 bis 4 und einem Hebelelement, dadurch gekennzeichnet, dass das Messer-Wechsel-System derart ausgebildet ist, dass, wenn das Hebelelement in das erste Loch eingreift und eine Kraft oder eine radiale Kraft, insbesondere in Richtung des Schneidebereichs oder der Schneide oder eine radial Richtung bezüglich der Schwenkachse, ausgeübt wird, das Messer um den Schwenkbereich, bevorzugt um die erste Ausnehmung, und/oder insbesondere um eine Schwenkwelle der Schneidvorrichtung, schwenkbar ist.

### Ausführungsbeispiele

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen landwirtschaftliche Erntemaschine mit einem ersten Ausführungsbeispiels einer erfindungsgemässen Schneidvorrichtung, und
- Fig. 2: eine schematische Darstellung des ersten Ausführungsbeispiels des erfindungsgemässen Messers, und
- Fig. 3: eine schematische Darstellung eines ersten Ausführungsbeispiels des erfindungsgemässen Hebel-Messer-Systems, und
- Fig. 4: eine schematische Darstellung des ersten Ausführungsbeispiels der erfindungsgemässen Schneidvorrichtung mit der Positionierungseinrichtung in der ersten Position, und
- Fig. 5: eine schematische Darstellung des ersten Ausführungsbeispiels der erfindungsgemässen Schneidvorrichtung mit der Positionierungseinrichtung in der zweiten Position, und
- Fig. 6: eine schematische Darstellung des ersten Ausführungsbeispiels der erfindungsgemässen Schneidvorrichtung mit der Positionierungseinrichtung in der dritten Position, und
- Fig. 7: eine schematische Darstellung eines zweiten Ausführungsbeispiels der erfindungsgemässen Schneidvorrichtung.

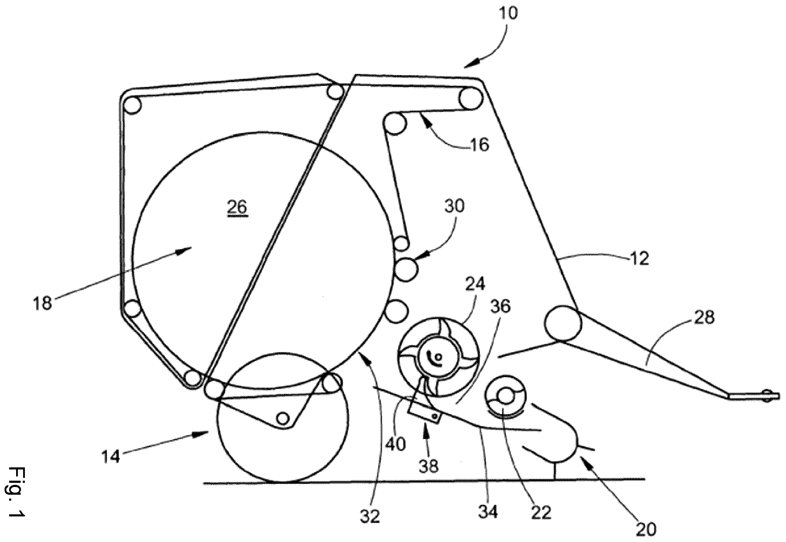

Die Figur 1 zeigt eine schematische Darstellung eines ersten Ausführungsbeispiels einer erfindungsgemässen landwirtschaftliche Erntemaschine, vorliegend eine Ballenpresse 10, mit einem ersten Ausführungsbeispiels einer erfindungsgemässen Schneidvorrichtung.

Die in Figur 1 gezeigte Ballenpresse 10 weist einen Ballenpressenrahmen 12, ein Fahrgestell 14, Pressmittel 16, eine Presskammer 18, eine Aufnahmeeinheit 20, einen Fördereinheit 22 und einen Rotor 24 auf. Die Ballenpresse 10 steht hier stellvertretend für jede Bauart einer Ballenpresse, d.h. als Rundballenpresse mit festem oder variablem Presskammervolumen, mit Riemen, Rollen oder Ketten, als Quaderballenpresse, in der Landwirtschaft, in der Industrie oder im Gewerbe, etc. Im herkömmlichen Fall wird eine solche Ballenpresse 10 über ein Feld gezogen, um halmförmiges Erntegut, z.B. Stroh, Heu oder Silage vom Boden aufzunehmen und es der Presskammer 18 oder einem Laderaum eines Ladewagens zuzuführen, um darin z.B. einen Ballen 26 zu bilden oder das Erntegut zu speichern und an geeigneter Stelle abzuladen. Der Ballenpressenrahmen 12 enthält Wände und Streben, die auf dem Fahrgestell 14 ruhen und mittels einer Deichsel 28 an ein Fahrzeug, z.B. einen Ackerschlepper anschließbar sind. Das Fahrgestell 14 besteht aus einer Achse und Rädern in herkömmlicher Weise.

Die Pressmittel 16 werden bei dem dargestellten Ausführungsbeispiel von Riemen gebildet, die über Rollen 30 geführt oder mit diesen kombiniert sind. Diese Pressmittel 16 belassen einen Abstand, um einen Einlass 32 für das Erntegut in die Presskammer 18 zu bilden. Die Pressmittel 16 können in beiden Richtungen umlaufen. Die Presskammer 18 ist in diesem Ausführungsbeispiel in konstanter Größe ausgebildet, kann aber beliebig ausgeführt werden.

Die Aufnahmeeinheit 20, vorliegend eine Pick-up, nimmt Erntegut vom Boden auf, das in einem Schwad von sich ändernder Stärke und Größe abgelegt ist und auf dem Weg zur Presskammer 18 auf eine schmalere Breite zusammengeführt wird. Das von der Aufnahmeeinheit 20 aufgenommene Erntegut wird mittels des an seiner Abgabeseite angeordneten Fördereinheit 22 zusammengeführt, bei dem es sich um eine Querförderschnecke handelt, die sich aus einem zentralen Rohr und um das Rohr gewickelten Wendeln zusammensetzt. Die Fördereinheit 22 übergibt das Erntegut dann an den unterschlächtig arbeitenden Rotor 24, der ein zentrales Rohr und daran befestigte Mitnehmer aufweist und es in den Einlass 32 fördert. Unterhalb der Fördereinheit 22 und des Rotors 24 befindet sich eine Wand 34, bevorzugt ein Unterboden, besonders bevorzugt ein Blech, an deren Oberseite das Erntegut entlang gefördert wird. Die Wand 34 kann insbesondere eine starre Wand sein. Zwischen der Wand 34 und dem Rotor 24 befindet sich demnach ein Kanal 36, durch den das Erntegut gefördert wird.

In den Kanal 36 können wahlweise Messer 40 einer Schneidvorrichtung 38 eingefügt werden, um das Erntegut in kürzere Stücke zu zerteilen. Die Schneidvorrichtung 38 umfasst mehrere seitlich (quer zur Flussrichtung des Emteguts) nebeneinander angeordnete Messer 40.

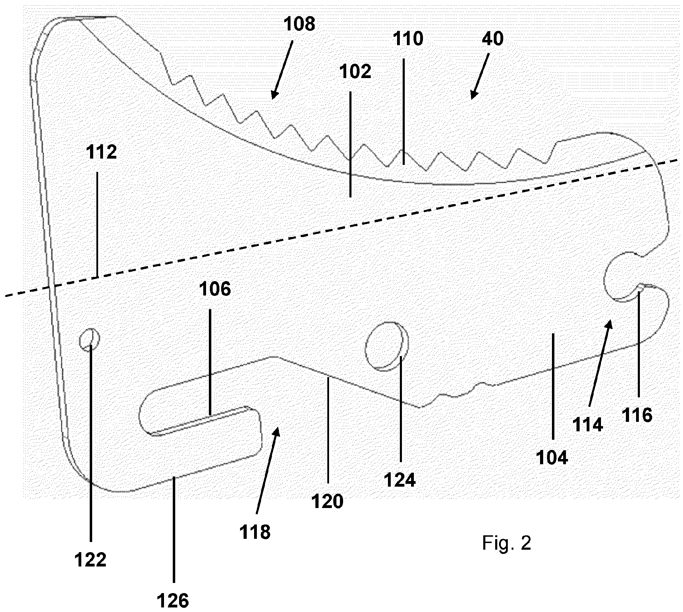

Figur 2 zeigt eine schematische Darstellung des ersten Ausführungsbeispiels des erfindungsgemässen Messers 40. Das in Figur 2 gezeigte Messer 40 entspricht im Wesentlichen dem in Figur 1 gezeigten Messer 40, sodass im Folgenden lediglich auf Details und/oder Unterschiede eingegangen wird. Die in Figur 1 dargestellte Erntemaschine, insbesondere die Ballenpresse 10, und/oder die Schneidvorrichtung 38 kann das in Figur 2 dargestellte Messer 40 umfassen.

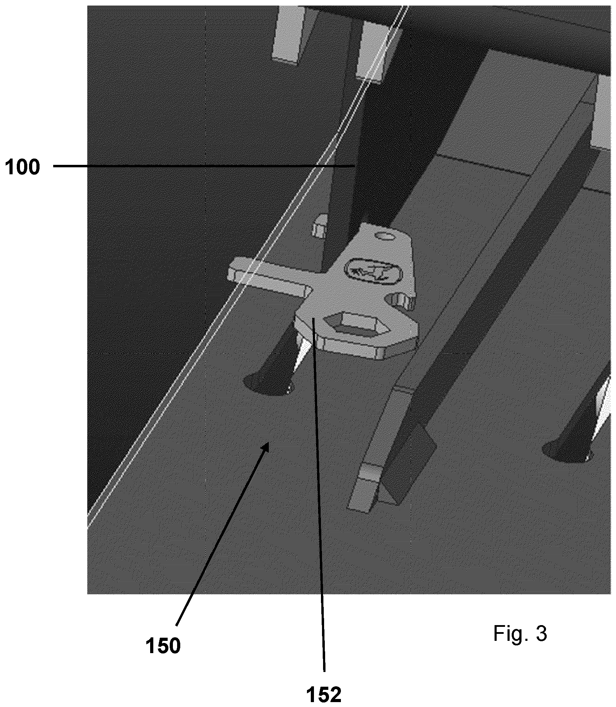

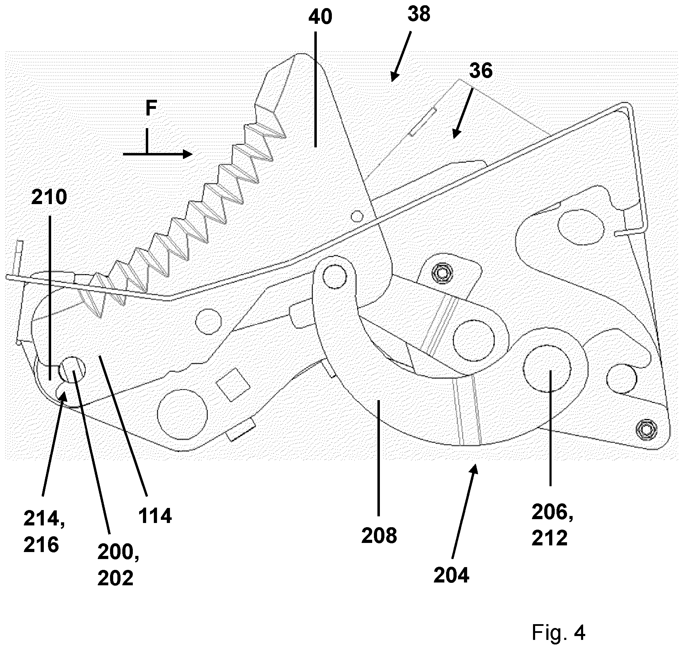

Das Messer 40 für eine Schneidvorrichtung 38 für eine landwirtschaftliche Erntemaschine, umfasst einen Messerkörper 102 mit einer ersten Seite 104 und einer zweiten Seite 106. Der Messerkörper 102 weist einen Schneidebereich 108 mit einer Schneide 110 auf, wobei sich der Schneidebereich 108, insbesondere die Schneide 110, entlang einer Längsachse 112 des Messerkörpers 102 erstreckt. Das Messer 40, insbesondere der Messerkörper 102, umfasst weiter einen Schwenkbereich 114 mit einer ersten Ausnehmung 116 und einen Positionierungsbereich 118 mit einer zweiten Ausnehmung 120 zur Anordnung des Messers 40 an oder in der Schneidvorrichtung 38. Die erste Ausnehmung 116 ist zur Aufnahme einer Schwenkwelle 202 (siehe Figur 4) der Schneidvorrichtung 38 ausgebildet und die zweite Ausnehmung 120 zur Aufnahme einer Positionierungseinrichtung 204 ausgebildet. Das Messer 40 weist mindestens ein erstes und zweites Loch 122, 124 auf, bevorzugt genau ein erstes und zweites Loch 122, 124. Das erste Loch 122 ist zur Aufnahme eines Hebelelements 152 (siehe Figur 3) ausgebildet. Ausserdem kann das erste Loch 122 kleiner als das zweite Loch 124 sein. Die erste und zweite Ausnehmung 116, 120 sind zur Aussenkontur 126 des Messers 40 hin offen. Das erste und zweite Loch 122, 124 sind zur Aussenkontur 126 des Messers 40, insbesondere des Messerkörpers 102, hin geschlossen. Die Schneide 110 weist eine Vielzahl von Zähnen auf.

Figur 3 zeigt eine schematische Darstellung eines ersten Ausführungsbeispiels des erfindungsgemässen Hebel-Messer-Systems 150. Das in Figur 3 gezeigte Messer 40 entspricht im Wesentlichen dem in den Figuren 1 und 2 gezeigten Messer 40, sodass im Folgenden lediglich auf Details und/oder Unterschiede eingegangen wird. Das Hebel-Messer-System 150 umfasst das Messer 40 und ein Hebelelement 152. Das Hebel-Messer-System 150 ist derart ausgebildet, dass das Messer 40 um den Schwenkbereich 114, bevorzugt um die erste Ausnehmung 116, und/oder insbesondere um eine Schwenkwelle 202 der Schneidvorrichtung 38, schwenkbar ist, wenn das Hebelelement 152 in das erste Loch 122 eingreift und eine Kraft in Richtung des Schneidebereichs 108, insbesondere der Schneide 110, ausgeübt wird.

Figur 4 zeigt eine schematische Darstellung des ersten Ausführungsbeispiels der erfindungsgemässen Schneidvorrichtung 38 mit einer Positionierungseinrichtung 204 in der ersten Position. Die in Figur 4 gezeigte Schneidvorrichtung 38 entspricht im Wesentlichen der in Figur 1 gezeigten Schneidvorrichtung 38 und das in Figur 4 gezeigte Messer 40 entspricht im Wesentlichen dem in den Figuren 1 bis 3 gezeigte Messer 40, sodass im Folgenden lediglich auf Details und/oder Unterschiede eingegangen wird. Die in Figur 1 dargestellte Erntemaschine, insbesondere Ballenpresse 10, kann die in Figur 4 dargestellte Schneidvorrichtung 38 umfassen.

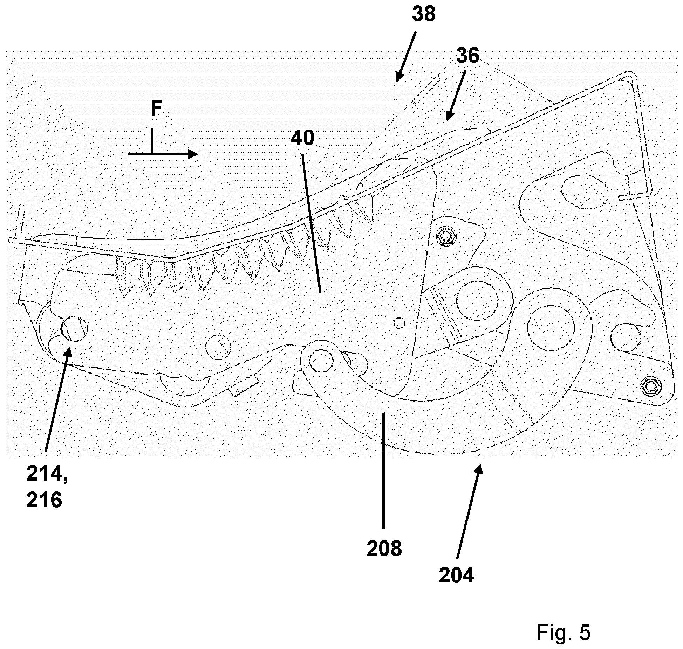

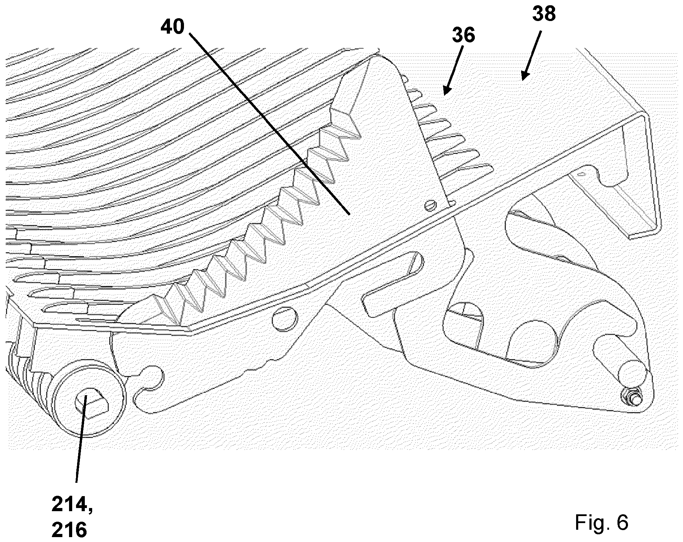

Die Schneidvorrichtung 38 umfasst mindestens ein Messer 40, bevorzugt mehrere Messer 40, wobei das oder die Messer 40 im von Erntegut durchströmbaren Kanal 36 angeordnet ist bzw. sind. Das oder die Messer 40 sind um eine sich quer zum Kanal 36 erstreckende Schwenkachse 200 schwenkbar mit der Schneidvorrichtung 38 verbindbar oder verbunden. Die Schneidvorrichtung 38 umfasst weiter eine Positionierungseinrichtung 204 zur Einstellung und/oder Verstellung des Messers 40 oder der Messer 40. Die Positionierungseinrichtung 204 ist zwischen einer ersten Position, in der die Positionierungseinrichtung 204 das Messer 40 in einer aktiven Position einstellt und/oder verstellt, in der sich das Messer 40 in den Kanal 36 erstreckt (in Figur 4 gezeigt), und einer zweiten Position, in der die Positionierungseinrichtung 204 das Messer 40 nicht in der aktiven Position einstellt und/oder verstellt, in der das Messer 40 aus dem Kanal 36 ausgeschwenkt ist (siehe Figur 5), und einer dritten Position einstellbar und/oder verstellbar, in der die Positionierungseinrichtung 204 nicht mit dem Messer 40 in Eingriff steht (siehe Figur 6), um eine Bewegung des Messers unabhängig von der Positionierungseinrichtung 204 zu ermöglichen. Das Messer 40 ist von der Schneidvorrichtung 38 trennbar, wenn die Positionierungseinrichtung 204 in der dritten Position ist. Die Schneidvorrichtung 38 umfasst ausserdem eine Schwenkwelle 202, wobei die Schwenkachse 200 durch die Schwenkwelle 202 ausgebildet ist. Die Positionierungseinrichtung 204 ist in der ersten Position und/oder der zweiten Position und allen Zwischenpositionen zwischen der ersten und der zweiten Position mit dem Positionierungsbereich 118 des Messers 40 verbunden. Die Positionierungseinrichtung 204 umfasst eine Schaltwelle 206 und einen Hebel 208. Der Hebel 208 ist in der ersten Position und/oder der zweiten Position und allen Zwischenpositionen zwischen der ersten und der zweiten Position mit dem Positionierungsbereich 118 des Messers 40 verbunden ist.

In Figur 4 ist die Schneidvorrichtung 38 in einer Situation dargestellt, in der alle Messer 40 sich in der aktiven Position befinden und in der sie sich in den Kanal 36 hinein erstrecken. Die Messer 40 sind an ihrem bezüglich der durch den Pfeil gekennzeichneten Flussrichtung F des Ernteguts stromauf liegenden Ende, dem Schwenkbereich 114, um die Schwenkachse 200 mit der Schwenkwelle 202 schwenkbar am Rahmen 210 der Schneidvorrichtung angeordnet, insbesondere verbunden und/oder abgestützt. Die Schwenkachse 200 und die Schwenkwelle 202 erstrecken sich horizontal und/oder quer zur Vorwärtsrichtung der Ballenpresse 10 und/oder quer zur Flussrichtung F und/oder quer zum Kanal. Der Rahmen 210 der Schneidvorrichtung kann dabei auch der Rahmen der Erntemaschine, insbesondere der Ballenpresse, sein, also der Ballenpressenrahmen 12.

Eine der Anzahl der Messer 40 entsprechende Anzahl an Hebeln 208 sind einzeln um eine parallel zur Schwenkachse 200 verlaufende Achse 212 mit der Schaltwelle 206 drehbar am Rahmen 210 der Schneidvorrichtung 38 angeordnet, insbesondere verbunden und/oder abgestützt. Die parallel zur Schwenkachse 200 verlaufende Achse 212 kann dabei durch die Schaltwelle 206 ausgebildet und/oder definiert sein. Im Speziellen sind die Hebel 208 mit der Schaltwelle 206 verbunden, insbesondere drehfest verbunden. Die Schaltwelle 206 ist also um eine parallel zur Schwenkachse 200 verlaufende Achse 212 drehbar an der Schneidvorrichtung 38 angeordnet, insbesondere kann die Schaltwelle 206 drehbar am Rahmen 210 der Schneidvorrichtung 38 angeordnet oder abgestützt sein. Das oder die Messer 40 können durch die mit dem Hebeln 208 zusammenwirkenden Schaltwelle 206 in die erste und/oder zweite Position und/oder alle Zwischenpositionen zwischen der ersten und der zweiten Position bewegbar sein.

Figuren 5 und 6 zeigen schematische Darstellungen des ersten Ausführungsbeispiels der erfindungsgemässen Schneidvorrichtung 38. Die in den Figuren 5 und 6 gezeigten Schneidvorrichtung 38 entsprechen im Wesentlichen der in den Figuren 1 und 4 gezeigten Schneidvorrichtung 38 und das in den Figuren 5 und 6 gezeigte Messer 40 entspricht im Wesentlichen dem in den Figuren 1 bis 4 gezeigte Messer 40, sodass im Folgenden lediglich auf Details und/oder Unterschiede eingegangen wird. Die in Figur 1 dargestellte Erntemaschine, insbesondere Ballenpresse 10, kann die in den Figuren 5 und 6 dargestellte Schneidvorrichtung 38 umfassen.

Figur 5 zeigt die Positionierungseinrichtung 204 in der zweiten Position, in der die Positionierungseinrichtung 204 das Messer 40 nicht in der aktiven Position einstellt und/oder verstellt, in der das Messer 40 aus dem Kanal 36 ausgeschwenkt ist.

Figur 6 zeigt die Positionierungseinrichtung 204 in der dritten Position, in der die Positionierungseinrichtung 204 nicht mit dem Messer 40 verbunden ist, insbesondere in Eingriff steht, um eine Bewegung des Messers unabhängig von der Positionierungseinrichtung 204 zu ermöglichen.

Die Figuren 4 bis 6 zeigen ausserdem, dass die Schwenkwelle 202 und das Messer 40 eine Verriegelungsformation 214 aufweisen, die das Messer 40 in einer ersten Konfiguration an der Schwenkwelle 202 verriegeln und in einer zweiten Konfiguration eine Trennung des Messers 40 von der Schwenkwelle 202 ermöglichen. Die Schwenkwelle 202 weist dazu abgeflachte Bereiche 216 auf, die mit der ersten Ausnehmung 116, die insbesondere komplementär geformt ist, des Messers oder der Messer 40 zusammenwirken. Die abgeflachten Bereiche 216 der Schwenkwelle 202, passen nur dann durch die erste Ausnehmung hindurch, wenn sich die Schwenkwelle 202 in einer bestimmten Stellung, insbesondere der zweiten Konfiguration befindet.

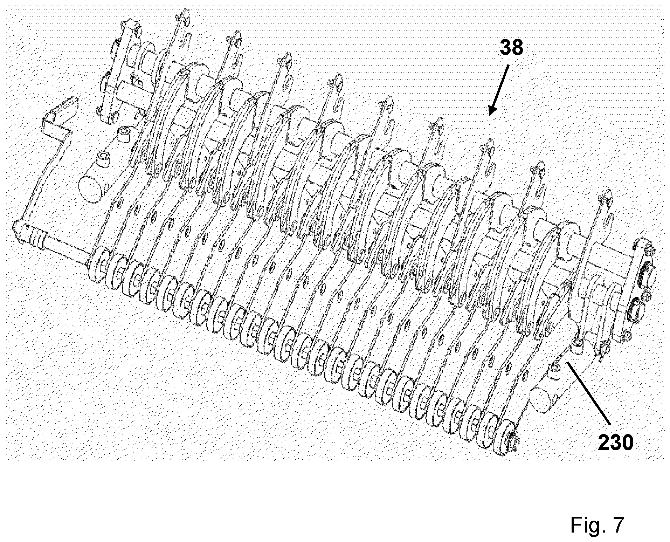

Figur 7 zeigt eine schematische Darstellung eines zweiten Ausführungsbeispiels der erfindungsgemässen Schneidvorrichtung 38. Die in Figur 7 gezeigte Schneidvorrichtung 38 entspricht im Wesentlichen der in den Figuren 1 und 4 bis 6 gezeigten Schneidvorrichtung 38 und das in Figur 7 gezeigte Messer 40 entspricht im Wesentlichen dem in den Figuren 1 bis 6 gezeigten Messer 40, sodass im Folgenden lediglich auf Details und/oder Unterschiede eingegangen wird. Die in Figur 1 dargestellte Erntemaschine, insbesondere Ballenpresse 10, kann die in Figur 7 dargestellte Schneidvorrichtung 38 umfassen.

Die Schneidvorrichtung 38 umfasst einen Aktuator 230. Der Aktuator 230 ist zwischen einer ersten Stellung, in der die Positionierungseinrichtung 204, insbesondere der Hebel 208, in der ersten Position ist, und einer zweiten Stellung, in der die Positionierungseinrichtung 204, insbesondere der Hebel 208, in der zweiten Position ist, und einer dritten Stellung beweglich sein, in der die Positionierungseinrichtung 204, insbesondere der Hebel 208, in der dritten Position ist.

## Patentansprüche

1. Messer für eine Schneidvorrichtung (38) für eine landwirtschaftliche Erntemaschine umfassend, einen Messerkörper (102) mit einer ersten Seite (104) und einer zweiten Seite (106), wobei der Messerkörper (102) einen Schneidebereich (108) mit einer Schneide (110) aufweist, die sich entlang einer Längsachse (112) des Messerkörpers (102) erstreckt, und das Messer (40) einen Schwenkbereich (114) mit einer ersten Ausnehmung (116) und einen Positionierungsbereich (118) mit einer zweiten Ausnehmung (120) zur Anordnung des Messers (40) an der Schneidvorrichtung (38) der landwirtschaftlichen Erntemaschine umfasst, und die erste Ausnehmung (116) zur Aufnahme einer Schwenkwelle (202) der Schneidvorrichtung (38) ausgebildet ist, und die zweite Ausnehmung (120) zur Aufnahme einer Positionierungseinrichtung (204) ausgebildet ist, **dadurch gekennzeichnet, dass** das Messer (40) mindestens ein erstes und zweites Loch (122, 124) aufweist.

2. Messer nach Anspruch 1, **dadurch gekennzeichnet, dass** das erste Loch (122) zur Aufnahme eines Hebelelements (152) ausgebildet ist, und/oder das erste Loch (122) kleiner als das zweite Loch (124) ist.

3. Messer nach Anspruch 1 oder 2, **dadurch gekennzeichnet, dass** das die erste und zweite Ausnehmung (116, 120) zur Aussenkontur des Messers (40) hin offen sind, und/oder das erste und zweite Loch (122, 124) zur Aussenkontur des Messers (40) hin geschlossen sind.

4. Messer nach mindestens einem der vorangehenden Ansprüche, **dadurch gekennzeichnet, dass** die Schneide (110) eine Vielzahl von Zähnen aufweist.

5. Schneidvorrichtung für eine landwirtschaftliche Erntemaschine, umfassend mindestens ein Messer (40) nach einem der Ansprüche 1 bis 4, wobei das Messer (40) in einem von Erntegut durchströmbaren Kanal (36) angeordnet ist, und das Messer (40) um eine sich quer zum Kanal (36) erstreckende Schwenkachse (200) schwenkbar mit der Schneidvorrichtung (38) verbindbar oder verbunden ist, und die Schneidvorrichtung (38) weiter eine Positionierungseinrichtung (204) zur Einstellung und/oder Verstellung des Messers (40) umfasst, und die Positionierungseinrichtung (204) zwischen einer ersten Position, in der die Positionierungseinrichtung (204) das Messer (40) in einer aktiven Position einstellt und/oder verstellt, in der sich das Messer (40) in den Kanal (36) erstreckt, und einer zweiten Position, in der die Positionierungseinrichtung (204) das Messer (40) nicht in der aktiven Position einstellt und/oder verstellt, in der das Messer (40) aus dem Kanal (36) ausgeschwenkt ist, und einer dritten Position einstellbar und/oder verstellbar ist, in der die Positionierungseinrichtung (204) nicht mit dem Messer (40) in Eingriff steht, um eine Bewegung des Messers (40) unabhängig von der Positionierungseinrichtung (204) zu ermöglichen, **dadurch gekennzeichnet, dass** das Messer (40) von der Schneidvorrichtung (38) trennbar ist, wenn die Positionierungseinrichtung (204) in der dritten Position ist.

6. Schneidvorrichtung nach Anspruch 5, **dadurch gekennzeichnet, dass** die Schneidvorrichtung (38) eine Schwenkwelle (202) umfasst.

7. Schneidvorrichtung nach Anspruch 6, **dadurch gekennzeichnet, dass** die Schwenkwelle (202) und/oder das Messer (40) eine Verriegelungsformation aufweisen, die das Messer (40) in einer ersten Konfiguration an der Schwenkwelle (202) verriegeln und in einer zweiten Konfiguration eine Trennung des Messers (40) von der Schwenkwelle (202) ermöglichen.

8. Schneidvorrichtung nach mindestens einem der Ansprüche 5 bis 7, **dadurch gekennzeichnet, dass** die Positionierungseinrichtung (204) in der ersten Position und/oder der zweiten Position und allen Zwischenpositionen zwischen der ersten und der zweiten Position mit dem Positionierungsbereich des Messers (40) verbunden ist.

9. Schneidvorrichtung nach mindestens einem der Ansprüche 5 bis 8, **dadurch gekennzeichnet, dass** die Positionierungseinrichtung (204) eine Schaltwelle (206) und einen Hebel (208) umfasst, und/oder der Hebel (208) in der ersten Position und/oder der zweiten Position und allen Zwischenpositionen zwischen der ersten und der zweiten Position mit dem Positionierungsbereich des Messers (40) verbunden ist.

10. Schneidvorrichtung nach Anspruch 9, **dadurch gekennzeichnet, dass** die Schaltwelle (206) um eine parallel zur Schwenkachse (200) verlaufende Achse (212) drehbar an der Schneidvorrichtung (38) angeordnet ist.

11. Schneidvorrichtung nach mindestens einem der Ansprüche 5 bis 10, **dadurch gekennzeichnet, dass** das Messer (40) durch die mit dem Hebel (208) zusammenwirkende Schaltwelle (206) in die erste und/oder zweite Position und/oder alle Zwischenpositionen zwischen der ersten und der zweiten Position bewegbar ist.

12. Schneidvorrichtung nach mindestens einem der Ansprüche 5 bis 11, **dadurch gekennzeichnet, dass** die Schneidvorrichtung (38) einen Aktuator (230) umfasst, und/oder der Aktuator (230) zwischen einer ersten Stellung, in der die Positionierungseinrichtung (204) in der ersten Position ist, und einer zweiten Stellung, in der die Positionierungseinrichtung (204) in der zweiten Position ist, und einer dritten Stellung beweglich ist, in der die Positionierungseinrichtung (204) in der dritten Position ist.

13. Eine landwirtschaftliche Erntemaschine mit einer Schneidvorrichtung (38) nach einem der Ansprüche 5 bis 12.

14. Verfahren zum Trennen eines Messers (40) von einer Schneidvorrichtung (38) gemäss einem der Ansprüche 5 bis 12.

15. Hebel-Messer-System mit einem Messer (40) nach einem der Ansprüche 1 bis 4 und einem Hebelelement (152), **dadurch gekennzeichnet, dass** das Messer-Wechsel-System derart ausgebildet ist, dass das Messer (40) um den Schwenkbereich, bevorzugt um die erste Ausnehmung, und/oder insbesondere um eine Schwenkwelle (202) der Schneidvorrichtung (38), schwenkbar ist, wenn das Hebelelement in das erste Loch (122) eingreift und eine Kraft ausgeübt wird.
